# EUROPEAN PATENT SPECIFICATION

(11) **EP 2 068 539 B1**
(45) Date of publication and mention of the grant of the patent: **07.08.2019**
(21) Application number: 07806199.1
(22) Date of filing: 29.08.2007
(51) Int. Cl.: H04M 1/725, H04W 8/18, H04W 88/06, H04M 1/2745, H04M 1/253

(54) **COMMUNICATION DEVICE, COMMUNICATION METHOD, AND INFORMATION RECORDING MEDIUM**
KOMMUNIKATIONSEINRICHTUNG, KOMMUNIKATIONSVERFAHREN UND INFORMATIONSAUFZEICHNUNGSMEDIUM
DISPOSITIF DE COMMUNICATION, PROCÉDÉ DE COMMUNICATION ET SUPPORT D'ENREGISTREMENT D'INFORMATIONS

(30) Priority: 27.09.2006 JP 2006261611
(43) Date of publication of application: 10.06.2009
(73) Proprietor: NEC Corporation, Minato-ku Tokyo 108-8001 (JP)
(72) Inventor: ARIYOSHI, Hironobu, Tokyo; 108-8001 (JP)
(74) Representative: Schöniger, Franz-Josef
(86) International application number: PCT/JP2007/066722
(87) International publication number: WO 2008/038489

(56) References cited:
- WO-A1-2005/029889
- JP-A- 2000 049 961
- JP-A- 2001 119 452
- JP-A- 2006 109 260
- JP-A- 2006 180 174
- US-A1- 2004 057 568
- US-A1- 2005 129 241

## Description

### Technical Field

The present invention relates to a communication device, a communication method, and an information recording medium suitable for easily making selective use of communication means based on whom to communicate with.

### Background Art

Cellular phones include those that have a plurality of communication means (bearers) for users to appropriately select from. For example, as disclosed in Patent Literature 1, one such device has a communication means for voice calls via cellular phone communication, and a communication means for VoIP calls via wireless LAN communication.

Users register phone numbers for cellular phone communication and SIP (Session Initiation Protocol) addresses for wireless LAN communication separately to the telephone directory. The cellular phone uses the phone numbers when making calls using the cellular phone communication function, and uses the SIP addresses when making calls using the wireless LAN communication function.
Patent Literature 1: Unexamined Japanese Patent Application KOKAI Publication No. 2005-236769

WO 2005/029889 A1 discloses a telephone capable of placing or receiving calls over the PSTN or a packet network. The telephone stores multiple telephone numbers for each potential called party along with preferences that govern the order of selecting telephone numbers to service any given outgoing call. Some or all of the telephone numbers are associated with a presence service. Presence indicators stored in the telephone are dynamically updated via the packet network connection and are used as part of the telephone number selection algorithm.

US 2005/129241 A1 discloses a method for performing expedited communication functions on a mobile device. The method includes monitoring the duration of key press on a keyboard of the mobile device and determining if the monitored duration of the key press is greater than a threshold duration. If the monitored duration of the key press is determined to be less than the threshold duration, then a primary key function associated with the pressed key is activated. If the monitored duration of the key press is determined to be greater than the threshold duration, then an expedited communication function associated with the pressed key is activated.

### Disclosure of Invention

### Problem to be Solved by the Invention

The cellular phone of Patent Literature 1 requires a user to designate the bearer to be used for making a call, and also the phone number or the SIP address of the callee. However, since the cellular phone of Patent Literature 1 makes a call via any selected one of a bearer that is currently set, a bearer that provides the most stable connection at the current location, and a bearer that requires the lowest communication charge, the user has to take the trouble to change the communication modes each time he/she makes a call if it is the user's desire to use different bearers according to the persons to communicate with.

For example, in a case where although a user has registered the phone number or the SIP address of a person whom he/she often calls for abbreviated dialing so he/she can easily call the person, the user nevertheless wants to call the person via a different bearer from that that is currently set, the user has to temporarily change the communication modes before calling the person. Therefore, there is a problem that the user cannot easily make a call.

Hence, an object of the present invention is to provide a communication device, a communication method, and an information recording medium that can solve the above problem and by which it is easy to use different communication means selectively according to whom to communicate with.

The present invention is defined in the independent claims. The dependent claims define embodiments.

### Effect of the Invention

The present invention having the above-described configuration can achieve an effect that it is possible to easily make selective use of communication means based on whom to communicate with.

### Brief Description of Drawings

[Fig. 1] A block diagram showing the configuration of a cellular phone according to one embodiment of the present invention.
[Fig. 2] A diagram showing example configurations of a telephone directory list, telephone directory data, and abbreviated dialing selection information.
[Fig. 3] A flowchart showing a telephone directory registration process.
[Fig. 4] A flowchart showing a calling process.
[Fig. 5] A diagram showing examples of display on a display unit.
[Fig. 6] A diagram showing an example configuration of a bearer table.

### Explanation of Reference Numerals

- 1: cellular phone
- 11: CPU
- 12: telephone directory memory
- 13: abbreviated dialing memory
- 14: cellular phone sending/receiving unit
- 15: wireless LAN sending/receiving unit
- 16: sound output unit
- 17: sound input unit
- 18: ROM
- 19: work memory
- 20: key input unit
- 21: operation key
- 22: display control unit
- 23: display unit
- 101: telephone directory list
- 102: telephone directory data
- 103: abbreviated dialing selection information
- 201: telephone directory registration screen
- 202: memory number entry screen
- 203: abbreviated dialing bearer selection screen
- 204: abbreviated dialing number selection screen
- 250: bearer table

### Best Mode for Carrying Out the Invention

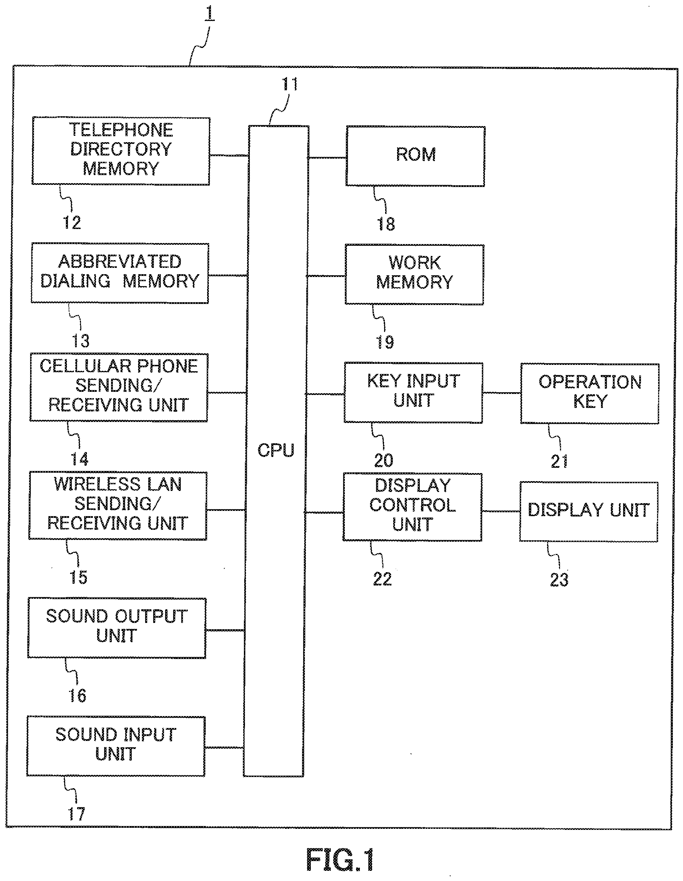

Next, an embodiment of the present invention will be explained with reference to the drawings. Fig. 1 is a block diagram showing the configuration of a communication device according to one embodiment of the present invention. The present embodiment employs a cellular phone as a communication device.

The cellular phone 1 includes a CPU (Central Processing Unit) 11, a telephone directory memory 12, an abbreviated dialing memory 13, a cellular phone sending/receiving unit 14, a wireless LAN (Local Area Network) sending/receiving unit 15, a sound output unit 16, a sound input unit 17, a ROM (Read Only Memory) 18, a work memory 19, a key input unit 20, operation keys 21, a display control unit 22, and a display unit 23.

The CPU 11 is connected to each unit in the cellular phone 1. The ROM 18 pre-stores various control programs executed by the CPU 11, and data regarding dictionaries used for character translation, etc. The work memory 19 is constituted by a RAM (Random Access Memory), and stores data that is temporarily necessary for the CPU 11 to execute programs.

The telephone directory memory 12 stores, for example, name, phone number, SIP address, e-mail address, etc. in association. The telephone directory memory 12 is constituted by a nonvolatile memory. The abbreviated dialing memory 13 stores information indicating by which communication means (bear) a call will be made when a user pushes a button that is registered for abbreviated dialing, and information indicating which of the phone number and the SIP address will be used to make a call when a user pushes a button that is registered for abbreviated dialing. The abbreviated dialing memory 13 is constituted by a nonvolatile memory.

Here, an abbreviated dialing function is a function that allows the user to register a desired phone number, etc. to the cellular phone 1 in association with a predetermined key, and to easily make a call not by entering the phone number, etc. of the callee every time the user calls the person, but by pushing the key to which the phone number, etc. have been registered before. For example, the user can make a call by so-called "two-touch dialing". Two-touch dialing is a function that enables a call to be made easily by two key operations, and one form of abbreviated dialing. That is, a key to which the phone number, etc. of a callee are associated and a call key are pushed, then a call can be made to the callee. In the following explanation, two-touch dialing will be used as abbreviated dialing, but the present invention is not limited to two-touch dialing. For example, one-touch dialing that enables a call to be made by one push to a key that is provided with functions as both an abbreviated dialing key and a call key may also be used.

In the present embodiment, since desired phone numbers, etc. will be registered in association with the ten keys, the cellular phone 1 can accept abbreviated dialing registration in association with memory numbers of 0 to 9. However, if any other keys are available, abbreviated dialing registration may be made in association with memory numbers of 10 and larger. Any predetermined keys or buttons other than the ten keys may be used instead.

That is, the telephone directory memory 12 serves as a storage unit that stores in association, callee information (e.g., phone number, SIP address, etc.) that specifies a callee, and bearer information that designates any of a plurality of communication means (e.g., cellular phone communication, wireless LAN communication, etc.) that is used for making a call to the callee.

The abbreviated dialing memory 13 serves as a storage unit that stores callee information and bearer information in association with information (e.g., memory number) that indicates a predetermined operation key 21 provided on the cellular phone 1.

The key input unit 20 is an input circuit that receives key entries via the operation keys 21. The operation keys 21 include, for example, the ten keys, a call start key (call key), a call end key, a cursor key, and a power key, etc. The display control unit 22 is a control circuit that controls the display unit 23. The display unit 23 includes a display device such as a liquid crystal panel, an organic EL (electro-luminescence) display, or the like that is either achromatic or chromatic. The display device is set on the front face of the cellular phone 1. The user can view various still images and moving images displayed on the display device.

That is, the key input unit 20 functions as a callee entry receiving unit that receives callee information entry from the user.

The cellular phone sending/receiving unit 14 is a circuit that wirelessly sends or receives a sound signal of a voice call, e-mail data, etc under the control of the CPU 11. The wireless LAN sending/receiving unit 15 is a circuit that sends or receives a VoIP (Voice over Internet Protocol) call, e-mail data, etc. via a wireless LAN under the control of the CPU 11. The sound output unit 16 decodes sound data, etc. represented by a digital sound signal received by the cellular phone sending/receiving unit 14 or the wireless LAN sending/receiving unit 15, converts it to an analog signal via a D/A (Digital/Analog) converter, and outputs sounds to a speaker, under the control of the CPU 11. The sound input unit 17 collects calling voices, etc. of the user of the cellular phone 1, etc. by a microphone, and under the control of the CPU 11, converts the voices to a digital signal via an A/D (Analog/Digital) converter.

The CPU 11, the cellular phone sending/receiving unit 14, and the wireless LAN communication unit 15 function as a calling unit in cooperation with one another. That is, if the telephone directory memory 12 stores bearer information associated with callee information received by the key input unit 20, the CPU 11 acquires the bearer information associated with the received callee from the telephone directory memory 12. Then, the CPU 11 makes a call to the callee indicated by the acquired callee information by controlling either the cellular phone sending/receiving unit 14 or the wireless LAN communication unit 15 that is indicated by the acquired bearer information.

When the user pushes a predetermined operation key 21, the CPU 11 acquires callee information and bearer information that are associated with information (e.g., memory number) that indicates the pushed operation key 21 from the abbreviated dialing memory 13. Then, the CPU 11 makes a call to the callee indicated by the acquired callee information by controlling either the cellular phone sending/receiving unit 14 or the wireless LAN communication unit 15 that is indicated by the acquired bearer information.

The cellular phone 1 of the present embodiment can perform communications via cellular phone communication by the cellular phone sending/receiving unit 14 and via wireless LAN communication by the wireless LAN sending/receiving unit. The cellular phone 1 has four communication modes, which are:
(mode 1) a mode that prioritizes wireless LAN communication (dual operation);
(mode 2) a mode that prioritizes cellular phone communication (dual operation);
(mode 3) a mode that uses only wireless LAN communication (single operation); and
(mode 4) a mode that uses only cellular phone communication (single operation).
The user can set the cellular phone 1 to a desired communication mode. When a mode (mode 1 or mode 2) that prioritizes one communication means (bearer) is selected, the default causes the CPU 11 to control the cellular phone sending/receiving unit 14 or the wireless LAN sending/receiving unit 15 to make a call via the prioritized bearer. However, a user's operation to a menu, etc. can cause a call to be made via a non-prioritized bearer.

That is, the key input unit 20 functions as a priority entry receiving unit that receives an entry that designates a communication means of either cellular phone communication or wireless LAN communication that is used preferentially from the user. Then, the CPU 11 makes a call by controlling the communication means of either the cellular phone sending/receiving unit 14 or the wireless LAN communication unit 15 that is indicated by the received entry.

The cellular phone 1 further has a calling bearer automatic selection function. That is, in a case where the communication mode is either the mode 1 or the mode 2, the CPU 11 makes a call via the prioritized bearer at the default. However, if the prioritized bearer is out of service at the communication area and the non-prioritized bearer is in service at the communication area, the CPU 11 makes a call by automatically selecting the non-prioritized bearer.

For example, the CPU 11 determines that the current location is within the service area if the intensity of the radio waves received by the antennas provided to the cellular phone sending/receiving unit 14 and wireless LAN sending/receiving unit 15 is equal to or larger than a predetermined value, and determines that the current location is outside the service area if the intensity is smaller than the predetermined value. Alternatively, the cellular phone 1 may further be provided with a GPS (Global Positioning System) and a memory for storing area information that defines communication areas, and the CPU 11 may determine whether it is within the service area or not by determining whether the current location acquired by the GPS is included or not in a communication area indicated by the area information pre-stored in the memory.

That is, the CPU 11 functions as a determining unit that determines for each communication means whether the communication means can be used or not based on the intensity of the radio wave used for its communication. Then, when it is determined that the communication means indicated by the entry received by the key input unit 20 cannot be used, the CPU 11 makes a call by using another communication means determined as can be used.

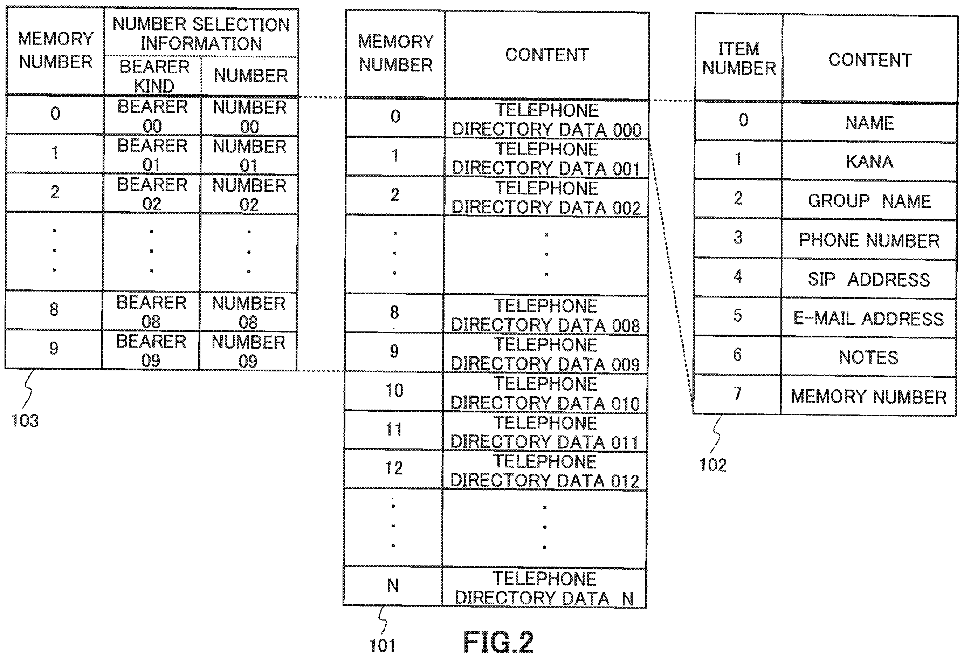

Fig. 2 is a diagram showing an example configuration of a telephone directory list 101, telephone directory data 102 stored in the telephone directory memory 12, and abbreviated dialing selection information 103 stored in the abbreviated dialing memory 13. The telephone directory data 102 stores name, kana teaching how to pronounce the name, group name, phone number used for cellular phone communication, SIP address used for wireless LAN communication, e-mail address, user's free notes, and memory number in association. In this example, one phone number, one SIP address, and one e-mail address are registered, but a plurality of them may be registered. In this case, the phone number or SIP address used for abbreviated dialing may be, for example, the one registered first.

The telephone directory list 101 is made up of memory numbers ("1" to "N") and contents ("telephone directory data 000" to "telephone directory data N"). The telephone directory data 000 to the telephone directory data N are each made up of item numbers and contents. For example, in the present diagram, the telephone directory data 102 includes a content "name" for an item number "0", a content "kana" for an item number "1", a content "group name" for an item number "2", a content "phone number" for an item number "3", a content "SIP address" for an item number "4", a content "e-mail address" for an item number "5", a content "notes" for an item number "6", and a content "memory number" for an item number "7".

The memory numbers "0" to "9" on the telephone directory list 101 are each assigned abbreviated dialing selection information 103. In the abbreviated dialing selection information 103, the memory number "0" is assigned "bearer 00" and "number 00" as number selection information. Likewise, the memory number "1" is assigned "bearer 01" and "number 01" as number selection information, ..., the memory number "8" is assigned "bearer 08" and "number 08" as number selection information, and the memory number "9" is assigned "bearer 09" and "number 09" as number selection information, respectively,

An SIP address is made up of a data portion indicating a user name and a data portion indicating a domain name. Typically, an SIP address is expressed as "user-name @ domain-name".

The abbreviated dialing selection information 103 stores number selection information in association with a memory number. Number selection information includes bearer information that designates a communication means and callee information that indicates the phone number or SIP address of a callee that is used for abbreviated dialing.

Fig. 2 is one example configuration of the telephone directory list 101, the telephone directory data 102, and the abbreviated dialing selection information 103, and an embodiment including changes to this configuration that are made within the scope of the claims may be employed.

In the present embodiment, the user may omit entering a domain name. When the user does so, the CPU 11 generates the SIP address by applying a preset domain name.

That is, the CPU 11 functions as a generating unit that generates an SIP address by applying a predetermined domain name, in a case where the SIP address received by the key input unit 20 does not include a data portion that designates a domain name. Then, the CPU 11 makes a call to the callee indicated by the generated SIP address by controlling the cellular phone sending/receiving unit 14 or the wireless LAN sending/receiving unit 15.

The general configuration of the above-described cellular phone sending/receiving unit 14 and wireless LAN sending/receiving unit 15 is well known to those with ordinary skill in the art, and detailed explanation of which will not be provided.

Next, a telephone directory registration process and a calling process that are performed cooperatively by the units of the cellular phone 1 will be explained.

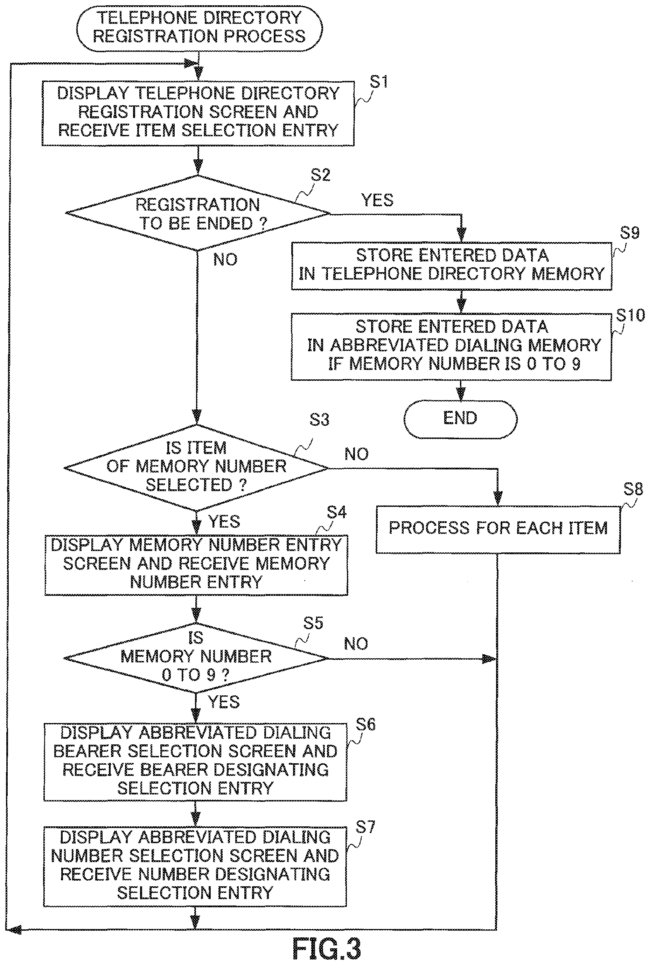

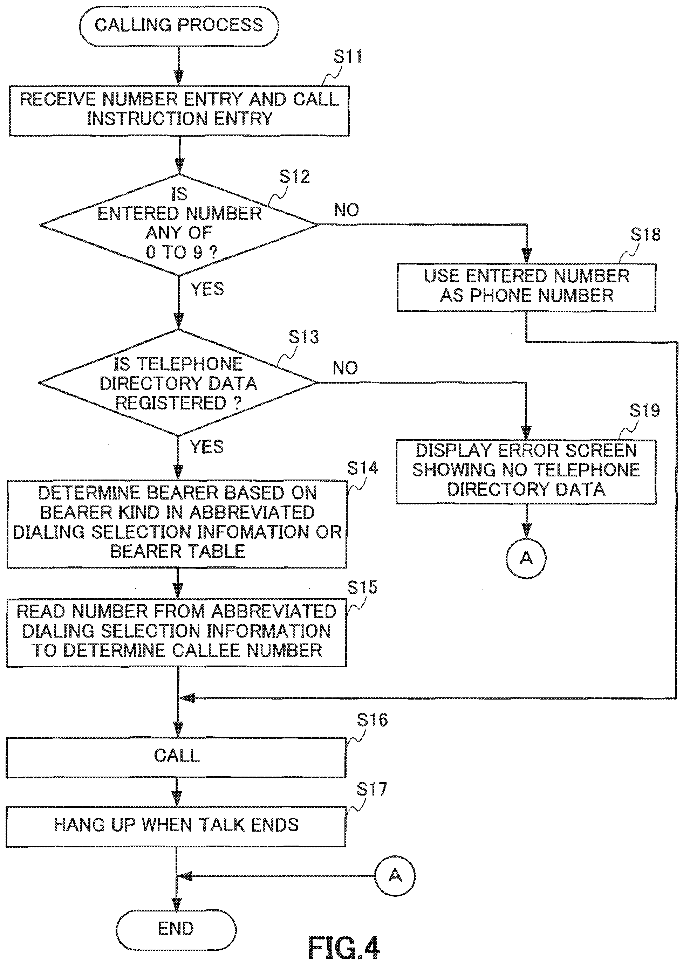

Fig. 3 is a flowchart showing the telephone directory registration process according to one embodiment of the present invention. Fig. 4 is a flowchart showing the calling process according to one embodiment of the present invention.

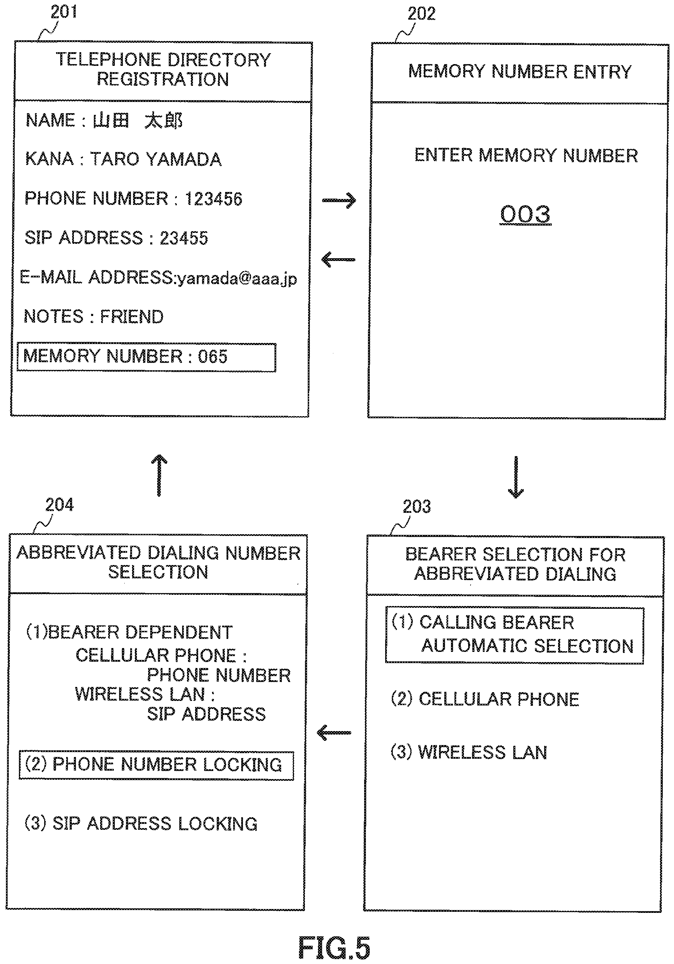

Fig. 5 is a diagram showing examples of display on the display unit 23. As shown in Fig. 5, the display control unit 22 controls the display unit 23 to display a telephone directory registration screen 201, a memory number entry screen 202, an abbreviated dialing bearer selection screen 203, and an abbreviated dialing number selection screen 204. The CPU 11 controls the display control unit 22 to display these screens by switching them according to each step in the process.

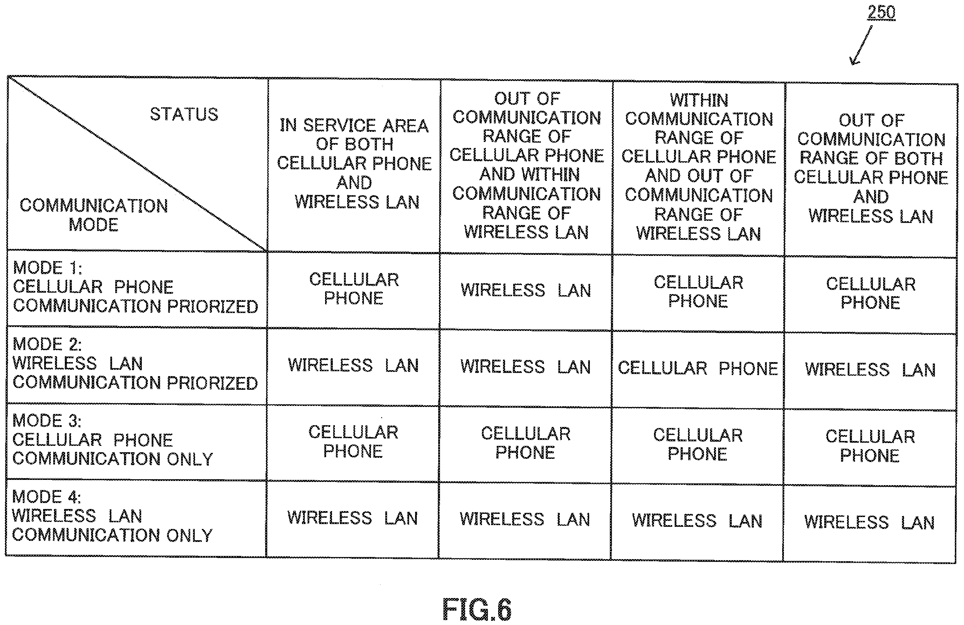

Fig. 6 is a diagram showing an example configuration of a bearer table 250 that provides determination criteria for selecting a bearer for automatic calling. As described above, there are for communication modes, namely, the mode that prioritizes cellular phone communication, the mode that prioritizes wireless LAN communication, the mode that uses only the cellular phone, and the mode that uses only the wireless LAN. As shown in Fig. 6, when the communication mode is the mode (mode 1) that prioritizes cellular phone communication, the CPU 11 selects a bearer as described below. That is, when the cellular phone 1 is within the service area of cellular phone communication and within the service area of the wireless LAN, the CPU 11 selects cellular phone communication. When the cellular phone 1 is outside the service area of cellular phone communication and within the service area of the wireless LAN, the CPU 11 selects wireless LAN communication. In a case where the cellular phone 1 is within the service area of cellular phone communication and outside the service area of the wireless LAN, the CPU 11 selects cellular phone communication. When the cellular phone 1 is outside the service area of cellular phone communication and also outside the service area of the wireless LAN, the CPU 11 selects cellular phone communication.

In a case where the communication mode is the mode (mode 2) that prioritizes wireless LAN communication, the CPU 11 selects a bearer as described below. That is, when the cellular phone 1 is within the service area of cellular phone communication and within the service area of the wireless LAN, the CPU 11 selects wireless LAN communication. When the cellular phone 1 is outside the service area of cellular phone communication and within the service area of the wireless LAN, the CPU 11 selects wireless LAN communication. When the cellular phone 1 is within the service area of cellular phone communication and outside the service area of the wireless LAN, the CPU 11 selects cellular phone communication. When the cellular phone 1 is outside the service area of cellular phone communication and outside the service area of the wireless LAN, the CPU 11 selects wireless LAN communication.

In a case where the communication mode is the mode (mode 3) that uses only cellular phone communication, the CPU 11 selects cellular phone communication in any state.

In a case where the communication mode is the mode (mode 4) that uses only wireless LAN communication, the CPU 11 selects wireless LAN communication in any state.

The telephone directory registration process of Fig. 3 and the calling process of Fig. 4 are realized by the CPU 11 executing control programs in the ROM 18.

### (Telephone Directory Registration Process)

First, the telephone directory registration process will be explained with reference to Fig. 3. This process is performed when the user makes registration to the telephone directory from a main menu or the like by using the cellular phone 1. First, the CPU 11 controls the display control unit 22 to display the telephone directory registration screen 201, and receives an entry of an instruction that selects any item from the user (step SI). The user selects any item by using an operation key 21.

The CPU 11 determines whether or not the registration to the telephone directory is to be ended (step S2). When the registration is to be ended (step S2; YES), the CPU 11 goes to step S9 to be described later. When the registration is not to be ended (step S2; NO), the CPU 11 determines whether the item selected by the user is memory number or not (step S3).

In the case where the item selected by the user is memory number (step S3; YES), the CPU 11 controls the display control unit 22 to display the memory number entry screen 202 and receives an entry of a memory number from the user (step S4). In a case where any other item is selected (step S3; NO), the CPU 11 performs a predetermined process corresponding to each item (step S8). After the process is performed, the CPU 11 returns to item selection again (step S1).

It is determined whether the memory number entered by the user at step S4 is 0 to 9 or not (step S5). In the case where any of 0 to 9 is entered (step S5; YES), the CPU 11 determines that it is an entry for abbreviated dialing, and controls the display control unit 22 to display the abbreviated dialing bearer selection screen 203 and receives an entry to select a bearer from the user (step S6). On the abbreviated dialing bearer selection screen 203, the user selects any of:
(bearer pattern 1) "calling bearer automatic selection" for automatically selecting a bearer for making a call based on the radio wave condition;
(bearer pattern 2) "cellular phone" for making a call by using cellular phone communication; and
(bearer pattern 3) "wireless LAN" for making a call by using wireless LAN communication.

Next, the CPU11 controls the display control unit 22 to display the abbreviated dialing number selection screen 204, and receives a selection entry that designates the phone number or SIP address of a callee from the user (step S7). On the abbreviated dialing number selection screen 204, the user selects any of:
(number pattern 1) "bearer dependent" for making a call by using a phone number in the case of cellular phone communication, or by using an SIP address in the case of wireless LAN communication;
(number pattern 2) "phone number locking" for making a call by necessarily using a phone number; and
(number pattern 3) "SIP address locking" for making a call by necessarily using an SIP address.

The CPU11 temporarily stores the memory number entered at step SI, information specifying the bearer selected at step S6, and information specifying the number pattern selected at step S7 in the work memory 19.

In a case where any item of the telephone directory has been changed by the user when it is determined at step S2 that the registration to the telephone directory is to be ended (step S2; YES), the CPU 11 updates the telephone directory list 101 and telephone directory data 102 stored in the telephone directory memory 12, and the abbreviated dialing selection information 103 stored in the abbreviated dialing memory 13 with the values temporarily stored in the work memory 19 (step S9). Then, in a case where the memory number corresponding to the item that has been added or updated is 0 to 9, the CPU 11 stores the data of the added or updated item in the abbreviated dialing selection information memory 13 (step S10), and terminates the telephone directory registration process.

In this way, the key input unit 20 functions as a registration entry receiving unit that receives entries of callee information (e.g., phone number, SIP address), information (bearer information) indicating the bearer used for making a call, and information designating the operation key 21 used for abbreviated dialing from the user. Then, the CPU 11 functions as a registration unit that stores the received callee information, bearer information, and information designating the operation key 21 in association in the abbreviated dialing memory 13.

### (Calling Process)

Subsequently, the calling process will be explained with reference to Fig. 4.

The cellular phone 1 according to the present embodiment is provided with a VoIP phone using a wireless LAN, in addition to the cellular phone. Therefore, the CPU 11 selects by which bearer a call will be made, as will be explained below.

First, the CPU 11 receives an entry of a phone number or SIP address of a callee, and an entry of an instruction to make a call from the user (step S11). When making a call, the user enters the phone number or the memory number for abbreviated dialing by using the operation keys 21 (e.g., the ten keys) and then pushes the call key.

The CPU 11 determines whether the key entered at step S11 is any of the keys 0 to 9 or not (step S12). In a case where the entered key is any of the keys 0 to 9 (step S12; YES), the CPU 11 sees the number of the entered key as a memory number, and determines whether telephone directory data 102 associated with this memory number is registered or not (step S13).

In a case where there is more than one push of the keys 0 to 9 at step S11, the CPU 11 regards the number of the key that is pushed first as a memory number.

Alternatively, in a case where there is one push of the keys 0 to 9, the CPU 11 may regard the number of the pushed key as a memory number, while in a case where there are multiple pushes, the CPU 11 may regard this as an entry of a phone number or SIP address not for abbreviated dialing.

In a case where any telephone directory data is registered in association with the entered memory number (step S13; YES), the CPU 11 reads out the bearer kind registered in the abbreviated dialing selection information 103 in association with the memory number to determine the bearer for making a call. In a case where the bearer kind is "calling bearer automatic selection", the CPU 11 determines the bearer for making a call based on the content of the bearer table 250 shown in Fig. 6 (step S14).

Next, the CPU 11 reads out the telephone number or the SIP address from the abbreviated dialing selection information 103 to use it as the telephone number or the SIP address of the callee (step S15). Then, the CPU 11 makes a call to the telephone number of the callee by controlling the cellular phone sending/receiving unit 14, or makes a call to the SIP address of the callee by controlling the wireless LAN sending/receiving unit 15 (step S16). After a line is connected to the phone of the callee, the user starts a talk over the phone. When the call end key is pushed or some other operation is made to finish the talk over the phone, the CPU 11 controls the cellular phone sending/receiving unit 14 or the wireless LAN sending/receiving unit 15 to cut the phone line (step S17), and terminates the calling process.

In a case where the number entered at step S12 is other than 0 to 9 (step S12; NO), the CPU 11 determines that the entered number is not for abbreviated dialing but is a phone number or SIP address (step S18), and makes a call via a bearer that is designated by the user (step S16). When the talk over the phone is finished, the CPU 11 cuts the phone line (step S17) and terminates the calling process.

In a case where no telephone directory data 102 is registered in association with the entered memory number at step S13 (step S13; NO), the CPU 11 controls the display control unit 22 to display an error display on the screen that notifies that no phone number or SIP address is registered (step S19), and terminates the calling process.

Next, example configurations of the screen display on the display unit 23 will be explained with reference to Fig. 5.

Fig. 5 shows example configurations of the telephone directory registration screen 201, the memory number entry screen 202, the abbreviated dialing bearer selection screen 203, and the abbreviated dialing number selection screen 204. When memory number is selected by the user on the telephone directory registration screen 201, the memory number entry screen 202 is brought up. In a case where the number of any of 0 to 9 is entered from the memory number entry screen 202, the abbreviated dialing bearer selection screen 203 is brought up, and otherwise, the telephone directory registration screen 201 is brought back.

On the abbreviated dialing bearer selection screen 203, any one of the three bearer patterns described above is selected by the user. For example, the user pushes an upward cursor key or a downward cursor key to change the selected portion (the rectangular frame in each screen of Fig. 5) to select any one bearer pattern.

On the abbreviated dialing number selection screen 204, the three number patterns described above are displayed, and any one of the three, namely, bearer dependent, phone number locking, and SIP address locking is selected by the user.

As can be seen, according to the present embodiment, since the bearer used for making a call and the phone number or the SIP address of the callee can be pre-designated in association with a memory number (0 to 9) available for abbreviated dialing, the user can do without designating them each time. Further, since the user does not have to designate whether to use the phone number or to use the SIP address, it becomes easier to use abbreviated dialing such as two-touch dialing.

In the present embodiment, since the keys 0 to 9 (the ten keys) out of the operation keys are associated with abbreviated dialing, the memory numbers 0 to 9 are used for abbreviated dialing. However, if there are any other keys that can be used for abbreviated dialing, ten or more numbers may be registered for abbreviated dialing. Needless to say, all of the keys 0 to 9 may not be used.

The present embodiment has explained that one phone number and one SIP address can be registered in the telephone directory data 102. However, a plurality of phone numbers and/or a plurality of SIP addresses may be registered. For example, it may be allowed to designate, from the abbreviated dialing number selection screen 204, a phone number (or an SIP address) registered at what order is to be set for abbreviated dialing.

Other than this, in a case where despite the user has selected "calling bearer automatic selection", he/she is about to make a call via a bearer that is different from the bearer that has already been designated by the communication mode, a pop-up window or the like may be displayed to query the user and more securely make the user recognize the bearer used for making a call. This prevents a wrong bearer from being used by mistake.

Further, data backup can be securely carried out for the telephone directory list 101, the telephone directory data 102, and the abbreviated dialing selection information 103, if it is possible to export them to another information recording medium such as a detachable flash memory card, etc. or reversely to import them from another information recording medium.

In the present embodiment, even if the user does not enter the domain name portion of an SIP address, the CPU 11 can generate the SIP address by applying a predetermined domain name. The domain name to be applied is pre-stored in, for example, the ROM 18 or a flash memory or the like provided separately. Therefore, the user can save the trouble to enter an SIP address.

For example, the user may use only numerals such as a phone number for the user name portion of an SIP address. In this case, only numerals are used for the items phone number and SIP address in the telephone directory data 102. This makes it substantially unnecessary to store a phone number and an SIP address clearly separately in the telephone directory data 102, and can simplify the management of phone numbers and SIP addresses. A number that is made only of numerals and can be used both as a phone number for cellular phone communication and as an SIP address for wireless LAN communication may be stored in the telephone directory data 102. For example, by using the same number for a phone number and for the user name of an SIP address, the user can easily make selective use of cellular phone communication and wireless LAN communication, only by registering the single common number.

The present embodiment has explained the cellular phone 1 that has two communication means, namely cellular phone communication and wireless LAN communication. However, the kinds of communication means are not limited to these. The cellular phone 1 may be configured to be able to use two cellular phone lines or two wireless LAN communications. Furthermore, the cellular phone 1 may have three or more communication means.

The present invention has been explained above with reference to an embodiment. However, the present invention is not limited to the above embodiment. Various changes that can be understood by those skilled in the art within the scope of the present invention may be made unto the configuration and details of the present invention.

The present invention claims priority based on Japanese Patent Application No. 2006-261611 filed on September 27, 2006.

### Industrial Applicability

The present invention can be applied not only to the cellular phone used in the above embodiment, but to portable terminals such as PHS (Personal Handyphone System), PDA (Personal Digital Assistants), etc. that can select from a plurality of communication means. The present invention can also be applied to land-line phones, personal computers, etc. that can select from a plurality of communication means.

## Claims

1. A communication device (1) that is provided with a plurality of communication means (14; 15), comprising:
a storage means adapted to store in association for a plurality of callees, callee information that designates a callee, bearer information that designates a communication means (14; 15) of the plurality of communication means (14; 15) that is used for making a call to the callee, and information that indicates a predetermined operation key (21) provided on the communication device (1), and
wherein the plurality of communication means (14; 15) include at least a communication means (14; 15) using a cellular phone, and the callee information includes a phone number,
wherein the plurality of communication means (14; 15) include at least a communication means (14; 15) using a wireless Local Area Network, LAN (15), and the callee information includes a Session Initiation Protocol, SIP address,
wherein the SIP address includes a data portion that designates a user name, and a data portion that designates a domain name;
a callee entry receiving means adapted to receive an entry of the callee information from a user, and
in a case where the callee information includes an entry of the SIP address, the callee entry receiving means adapted to receive the entry of the SIP address;
a generating means adapted to, in a case where the SIP address received by the callee entry receiving means does not include a data portion that designates the domain name, generate the SIP address by applying a predetermined domain name; and
a calling means adapted to, in a case where the bearer information which is associated with the callee information received by the callee entry receiving means is stored in the storage means, acquire the bearer information associated with the received callee from the storage means, and make a call to the callee indicated by the acquired callee information by using the communication means (14; 15) of the plurality of communication means (14; 15) that is indicated by the acquired bearer information,
in a case where the predetermined operation key (21) is pushed by the user, the calling means adapted to acquire the callee information and the bearer information associated with the information indicating the operation key (21) that is pushed from the storage means (12; 13), and adapted to make a call to the callee indicated by the acquired callee information using the communication means (14; 15) indicated by the acquired bearer information, and
in a case where the bearer information indicate wireless LAN (15) and the callee information indicate a SIP address, the calling means adapted to make a call to the callee indicated by the SIP address using wireless LAN (15).

2. The communication device (1) according to claim 1, further comprising
a priority entry receiving means adapted to receive an entry that designates a communication means (14; 15) of the plurality of communication means (14; 15) that is used preferentially from the user,
wherein the calling means adapted to make a call to the callee indicated by the acquired callee by using the communication means (14; 15) indicated by the entry received by the priority entry receiving means.

3. The communication device (1) according to claim 2, further comprising
a determining means adapted to determine for each of the plurality of communication means (14; 15) whether the communication means (14; 15) can be used or not, based on an intensity of a radio wave used for communication,
wherein in a case where the determining means determine that the communication means (14; 15) indicated by the entry received by the priority entry receiving means cannot be used, the calling means make a call by using any other communication means (14; 15) that the determining means determine can be used.

4. The communication device (1) according to claim 1, further comprising:
a registration entry receiving means adapted to receive an entry of the callee information, the bearer information, and information designating the predetermined operation key (21) from the user; and
a registration means adapted to store the callee information, the bearer information, and the information designating the predetermined operation key (21) that are received by the registration entry receiving means in the storage means in association.

5. A communication method for a communication device (1), comprising:
storing, in association, callee information that designates a callee, bearer information that designates a communication means (14; 15) of a plurality of communication means (14; 15) that is used for making a call to the callee, and information that indicates a predetermined operation key (21) provided on the communication device (1);
receiving an entry of the callee information from a user,
in a case where the callee information includes an entry of a SIP address, receiving the entry of the SIP address,
in a case where the SIP address received does not include a data portion that designates a domain name, generating the SIP address by applying a predetermined domain name; and
in a case where the bearer information which is associated with the received callee information is stored, acquiring the bearer information associated with the received callee, and making a call to the callee indicated by the acquired callee information by using the communication means (14; 15) indicated by the acquired bearer information,
in a case where the predetermined operation key (21) is pushed by the user, acquiring the associated callee information and the bearer information, and making a call to the callee indicated by the acquired callee information using the communication means (14; 15) indicated by the acquired bearer information,
in a case where the bearer information indicate wireless LAN (15) and the callee information indicate a SIP address, making a call to the callee indicated by the SIP address using wireless LAN (15).

6. A computer-readable information recording medium that stores a program for controlling a communication device (1) provided with a plurality of communication means (14; 15) to function as:
a storage means (12; 13) adapted to store in association for a plurality of callees, callee information that designates a callee, bearer information that designates a communication means (14; 15) of the plurality of communication means (14; 15) that is used for making a call to the callee, and information that indicates a predetermined operation key (21) provided on the communication device (1), and
wherein the plurality of communication means (14; 15) include at least a communication means (14; 15) using a cellular phone, and the callee information includes a phone number,
wherein the plurality of communication means (14; 15) include at least a communication means (14; 15) using a wireless LAN (15), Local Area Network, and the callee information includes a SIP, Session Initiation Protocol, address,
wherein the SIP address includes a data portion that designates a user name, and a data portion that designates a domain name;
a callee entry receiving means adapted to receive an entry of the callee information from a user, and
in a case where the callee information includes an entry of the SIP address, the callee entry receiving means adapted to receive the entry of the SIP address;
a generating means adapted to, in a case where the SIP address received by the callee entry receiving means does not include a data portion that designates the domain name, generate the SIP address by applying a predetermined domain name; and
a calling means adapted to, in a case where the bearer information which is associated with the callee information received by the callee entry receiving means is stored in the storage means (12; 13), acquire the bearer information associated with the received callee from the storage means (12; 13), and make a call to the callee indicated by the acquired callee information by using the communication means (14; 15) of the plurality of communication means (14; 15) that is indicated by the acquired bearer information,
in a case where the predetermined operation key (21) is pushed by the user, the calling means adapted to acquire the callee information and the bearer information associated with the information indicating the operation key (21) that is pushed from the storage means (12; 13), and adapted to make a call to the callee indicated by the acquired callee information using the communication means (14; 15) indicated by the acquired bearer information, and
in a case where the bearer information indicate wireless LAN (15) and the callee information indicate a SIP address, the calling means adapted to make a call to the callee indicated by the SIP address using wireless LAN (15).

## Patentansprüche

1. Kommunikationsvorrichtung (1), die mit einer Vielzahl von Kommunikationsmitteln (14; 15) versehen ist, umfassend:
ein Speichermittel (12; 13), das angepasst ist, um in Verbindung mit einer Vielzahl von Rufern Rufinformationen, die einen Rufempfänger bezeichnen, Trägerinformationen, die ein Kommunikationsmittel (14; 15) der Vielzahl von Kommunikationsmitteln (14; 15) bezeichnen, die zum Herstellen eines Anrufs an den Rufempfänger verwendet werden, und Informationen zu speichern, die einen vorbestimmte Bedientaste (21) anzeigen, die auf der Kommunikationsvorrichtung (1) vorgesehen sind, und
wobei die Vielzahl von Kommunikationsmitteln (14; 15) mindestens ein Kommunikationsmittel (14; 15) unter Verwendung eines Mobiltelefons beinhaltet, und die Rufinformationen eine Telefonnummer beinhalten,
wobei die Vielzahl von Kommunikationsmitteln (14; 15) mindestens ein Kommunikationsmittel (14; 15) unter Verwendung eines drahtlosen LAN (15), eines lokalen Netzwerks und der gerufenen Informationen eine SIP-, Session Initiation Protocol-, Adresse beinhaltet,
wobei die SIP-Adresse einen Datenabschnitt, der einen Benutzernamen bezeichnet, und einen Datenabschnitt, der einen Domänennamen bezeichnet, beinhaltet;
ein Empfangsmittel für die Rufnummerneingabe, das angepasst ist, um eine Eingabe der Rufnummerninformationen von einem Benutzer zu empfangen, und
in einem Fall, in dem die Rufnummerninformationen eine Eingabe der SIP-Adresse beinhalten, das Empfangsmittel für die Rufnummern-Eingabe, angepasst ist, um die Eingabe der SIP-Adresse zu empfangen;
ein Erzeugungsmittel, das angepasst ist, um in einem Fall, in dem die von dem Empfangsmittel für den Rufnamen empfangene SIP-Adresse keinen Datenabschnitt enthält, der den Domänennamen bezeichnet, die SIP-Adresse durch Anwendung eines vorbestimmten Domänennamens zu erzeugen; und
ein Anrufmittel, das angepasst ist, um in einem Fall, in dem die Trägerinformationen, die mit den von dem Empfangsmittel für die Rufannahme empfangenen Rufinformationen verbunden sind, in dem Speichermittel (12; 13) gespeichert sind, die mit dem empfangenen Ruf verbundenen Trägerinformationen von dem Speichermittel (12; 13) zu erfassen und einen Anruf an den durch die erfassten Rufinformationen angegebenen Rufempfänger unter Verwendung des Kommunikationsmittels (14; 15) der Vielzahl von Kommunikationsmitteln (14; 15) durchzuführen, das durch die erfassten Trägerinformationen angezeigt wird,
in einem Fall, in dem die vorgegebene Bedientaste (21) vom Benutzer gedrückt wird, die Aufrufeinrichtung angepasst ist, um die Rufinformationen und die Trägerinformationen aus den Speichermitteln (12; 13) zu erfassen, die mit den Informationen verbunden sind, die die Bedientaste (21) anzeigen, die gedrückt wird, und angepasst ist, um einen Anruf an den Rufempfänger zu tätigen, der durch die erfassten Rufinformationen angezeigt wird, unter Verwendung der Kommunikationsmittel (14; 15), die durch die erfassten Trägerinformationen angezeigt werden, und
in einem Fall, in dem die Trägerinformationen Wireless LAN (15) und die Rufinformationen eine SIP-Adresse anzeigen, die Anrufmittel angepasst sind, um einen Anruf an den durch die SIP-Adresse angegebenen Anrufer unter Verwendung von Wireless LAN (15) durchzuführen.

2. Die Kommunikationsvorrichtung (1) nach Anspruch 1, ferner umfassend
eine Empfangseinrichtung für einen Prioritätseintrag, die angepasst ist, um einen Eintrag zu empfangen, der ein Kommunikationsmittel (14; 15) der Vielzahl von Kommunikationsmitteln (14; 15) bezeichnet, die vorzugsweise von dem Benutzer verwendet wird,
wobei das Anrufmittel angepasst ist, um einen Anruf an den durch den erworbenen Anrufer angezeigten Anrufer unter Verwendung der Kommunikationsmittel (14; 15) zu tätigen, die durch den Eingang angezeigt werden, der durch das Prioritätseingangsempfangsmittel empfangen wird.

3. Die Kommunikationsvorrichtung (1) nach Anspruch 2, ferner umfassend
ein Bestimmungsmittel, das angepasst ist, um für jedes der Vielzahl von Kommunikationsmitteln (14; 15) zu bestimmen, ob das Kommunikationsmittel (14; 15) verwendet werden kann oder nicht, basierend auf einer Intensität einer für die Kommunikation verwendeten Funkwelle,
wobei in einem Fall, in dem die Bestimmungsmittel bestimmen, dass die Kommunikationsmittel (14; 15), die durch den durch die durch die Prioritätseingangsempfangsmittel empfangenen Eingang angezeigt werden, nicht verwendet werden können, die Aufrufmittel einen Anruf unter Verwendung aller anderen Kommunikationsmittel (14; 15) tätigen, die die Bestimmungsmittel bestimmen, verwendet werden können.

4. Die Kommunikationsvorrichtung (1) nach Anspruch 1, ferner umfassend:
ein Registrierungseintrag-Empfangsmittel, das angepasst ist, um eine Eingabe der Rufinformationen, der Trägerinformationen und Informationen, die den vorbestimmten Betriebsschlüssel (21) bezeichnen, vom Benutzer zu empfangen; und
ein Registriermittel, das angepasst ist, um die Rufinformationen, die Trägerinformationen und die Informationen, die die vorbestimmte Bedientaste (21) bezeichnen, zu speichern, die von dem Registrierungseingabe-Empfangsmittel in dem Speichermittel in Verbindung empfangen werden.

5. Kommunikationsverfahren für eine Kommunikationsvorrichtung, umfassend:
Speichern von Rufinformationen, die einen Rufempfänger bezeichnen, Trägerinformationen, die ein Kommunikationsmittel (14; 15) einer Vielzahl von Kommunikationsmitteln (14; 15) bezeichnen, die zum Herstellen eines Anrufs an den Rufempfänger verwendet werden, und Informationen, die eine vorbestimmte Bedientaste (21) anzeigen, die auf der Kommunikationsvorrichtung (1) bereitgestellt wird;
Empfangen einer Eingabe der Rufnummerninformationen von einem Benutzer,
in einem Fall, in dem die Rufnummerninformationen eine Eingabe einer SIP-Adresse beinhalten, Empfangen der Eingabe der SIP-Adresse,
in einem Fall, in dem die empfangene SIP-Adresse keinen Datenabschnitt enthält, der einen Domänennamen bezeichnet, Erzeugen der SIP-Adresse durch Anwenden eines vorbestimmten Domänennamens; und
in einem Fall, in dem die Trägerinformationen, die mit den empfangenen Rufinformationen verbunden sind, gespeichert werden, Erfassen der mit dem empfangenen Ruf verbundenen Trägerinformationen und Herstellen eines Anrufs an den durch die erfassten Rufinformationen angegebenen Rufempfänger unter Verwendung der durch die erfassten Trägerinformationen angegebenen Kommunikationsmittel (14; 15),
in einem Fall, in dem die vorgegebene Bedientaste (21) vom Benutzer gedrückt wird, Erfassen der zugehörigen Rufinformationen und der Trägerinformationen und Herstellen eines Anrufs an den durch die erfassten Rufinformationen angegebenen Rufempfänger unter Verwendung der durch die erfassten Trägerinformationen angegebenen Kommunikationsmittel (14; 15),
in einem Fall, in dem die Trägerinformationen Wireless LAN (15) und die Rufinformationen eine SIP-Adresse angeben, einen Anruf an den durch die SIP-Adresse angegebenen Rufenden unter Verwendung von Wireless LAN (15) durchführt.

6. Computerlesbares Informationsaufzeichnungsmedium, das ein Programm zum Steuern einer Kommunikationsvorrichtung (1) speichert, die mit einer Vielzahl von Kommunikationsmitteln (14; 15) versehen ist, um zu funktionieren als:
ein Speichermittel (12; 13), das angepasst ist, um in Verbindung mit einer Vielzahl von Rufern Rufinformationen, die einen Rufempfänger bezeichnen, Trägerinformationen, die ein Kommunikationsmittel (14; 15) der Vielzahl von Kommunikationsmitteln (14; 15) bezeichnen, die zum Herstellen eines Anrufs an den Rufempfänger verwendet werden, und Informationen zu speichern, die einen vorbestimmte Bedientaste (21) anzeigen, die auf der Kommunikationsvorrichtung (1) vorgesehen sind, und
wobei die Vielzahl von Kommunikationsmitteln (14; 15) mindestens ein Kommunikationsmittel (14; 15) unter Verwendung eines Mobiltelefons beinhaltet, und die Rufinformationen eine Telefonnummer beinhalten,
wobei die Vielzahl von Kommunikationsmitteln (14; 15) mindestens ein Kommunikationsmittel (14; 15) unter Verwendung eines drahtlosen LAN (15), eines lokalen Netzwerks und der gerufenen Informationen eine SIP-, Session Initiation Protocol-, Adresse beinhaltet,
wobei die SIP-Adresse einen Datenabschnitt, der einen Benutzernamen bezeichnet, und einen Datenabschnitt, der einen Domänennamen bezeichnet, beinhaltet;
ein Empfangsmittel für die Rufnummerneingabe, das angepasst ist, um eine Eingabe der Rufnummerninformationen von einem Benutzer zu empfangen, und
in einem Fall, in dem die Rufnummerninformationen eine Eingabe der SIP-Adresse beinhalten, das Empfangsmittel für die Rufnummern-Eingabe, angepasst ist, um die Eingabe der SIP-Adresse zu empfangen;
ein Erzeugungsmittel, das angepasst ist, um in einem Fall, in dem die von dem Empfangsmittel für den Rufnamen empfangene SIP-Adresse keinen Datenabschnitt enthält, der den Domänennamen bezeichnet, die SIP-Adresse durch Anwendung eines vorbestimmten Domänennamens zu erzeugen; und
ein Anrufmittel, das angepasst ist, um in einem Fall, in dem die Trägerinformationen, die mit den von dem Empfangsmittel für die Rufannahme empfangenen Rufinformationen verbunden sind, in dem Speichermittel (12; 13) gespeichert sind, die mit dem empfangenen Ruf verbundenen Trägerinformationen von dem Speichermittel (12; 13) zu erfassen und einen Anruf an den durch die erfassten Rufinformationen angegebenen Rufempfänger unter Verwendung des Kommunikationsmittels (14; 15) der Vielzahl von Kommunikationsmitteln (14; 15) durchzuführen, das durch die erfassten Trägerinformationen angezeigt wird,
in einem Fall, in dem die vorgegebene Bedientaste (21) vom Benutzer gedrückt wird, die Aufrufeinrichtung angepasst ist, um die Rufinformationen und die Trägerinformationen aus den Speichermitteln (12; 13) zu erfassen, die mit den Informationen verbunden sind, die die Bedientaste (21) anzeigen, die gedrückt wird, und angepasst ist, um einen Anruf an den Rufempfänger zu tätigen, der durch die erfassten Rufinformationen angezeigt wird, unter Verwendung der Kommunikationsmittel (14; 15), die durch die erfassten Trägerinformationen angezeigt werden, und
in einem Fall, in dem die Trägerinformationen Wireless LAN (15) und die Rufinformationen eine SIP-Adresse anzeigen, die Anrufmittel angepasst sind, um einen Anruf an den durch die SIP-Adresse angegebenen Anrufer unter Verwendung von Wireless LAN (15) durchzuführen.

## Revendications

1. Dispositif de communication (1) pourvu d'une pluralité de moyens de communication (14; 15), comprenant:
un moyen de stockage conçu pour stocker en association pour une pluralité de correspondant, des informations sur les correspondants qui désignent un correspondant, des informations relatives au support désignant un moyen de communication (14; 15) parmi la pluralité de moyens de communication (14; 15) et permettant de passer un appel au correspondant, et des informations indiquant une touche d'actionnement prédéterminée (21) prévue sur le dispositif de communication (1), et
dans lequel la pluralité de moyens de communication (14; 15) comprennent au moins un moyen de communication (14; 15) utilisant un téléphone cellulaire, et les informations sur les correspondants comprennent un numéro de téléphone,
dans lequel la pluralité de moyens de communication (14; 15) comprennent au moins un moyen de communication (14; 15) utilisant un réseau local sans fil, un réseau local (15), et les informations sur les correspondants comprennent une adresse SIP de protocole d'ouverture de session,
dans lequel l'adresse SIP comprend une partie données qui désigne un nom d'utilisateur et une partie données qui désigne un nom de domaine;
un moyen de réception de saisie de correspondant conçu pour recevoir une saisie des informations sur le correspondants, provenant d'un utilisateur, et
au cas où les informations sur les correspondants comprennent une saisie de l'adresse SIP, le moyen de réception de saisie de correspondant conçu pour recevoir la saisie de l'adresse SIP;
un moyen de génération conçu pour, au cas où l'adresse SIP reçue par le moyen de réception de saisie sur les correspondants n'inclut pas une partie de données désignant le nom de domaine, générer l'adresse SIP en appliquant un nom de domaine prédéterminé; et
un moyen d'appelant conçu pour, au cas où l'information de support associée à l'information sur les correspondants reçue par le moyen de réception de saisie de correspondant est stockée dans le moyen de stockage, acquérir les informations relatives au support associées au correspondant reçues du moyen de stockage, et passer un appel au correspondant indiqué en utilisant les informations sur les correspondants acquises en utilisant le moyen de communication (14; 15) parmi la pluralité de moyens de communication (14; 15) qui est indiquée par les informations relatives au support acquises,
au cas où l'utilisateur appuie sur la touche d'actionnement prédéterminée (21), le moyen d'appelant conçu pour acquérir les informations sur les correspondants et l'information de support associée à l'information indiquant la touche d'actionnement (21) qui est extraite du moyen de stockage (12) ; 13), et conçu pour passer un appel au correspondant indiqué par l'information sur les correspondants acquises en utilisant le moyen de communication (14; 15) indiqué par les informations relatives au support acquises, et
au cas où les informations relatives au support indiquent un réseau local sans fil (15) et les informations sur les correspondants indiquent une adresse SIP, le moyen d'appelant conçu pour passer un appel au correspondant indiqué par l'adresse SIP en utilisant un réseau local sans fil (15).

2. Dispositif de communication (1) selon la revendication 1, comprenant en outre:
un moyen de réception d'entrée prioritaire conçu pour recevoir une entrée qui désigne un moyen de communication (14; 15) parmi la pluralité de moyens de communication (14; 15) qui est utilisé de manière préférentielle par l'utilisateur,
dans lequel le moyen d'appelant conçu pour passer un appel au correspondant indiqué par le correspondant acquis en utilisant le moyen de communication (14; 15) indiqué par la saisie reçue par le moyen de réception de saisie prioritaire.

3. Dispositif de communication (1) selon la revendication 2, comprenant en outre:
un moyen de détermination conçu pour déterminer pour chacun de la pluralité de moyens de communication (14; 15) si le moyen de communication (14; 15) peut être utilisé ou non, en fonction de l'intensité d'une onde radio utilisée pour la communication,
dans lequel, au cas où le moyen de détermination détermine que le moyen de communication (14; 15) indiqué par la saisie reçue par le moyen de réception de saisie prioritaire ne peut pas être utilisé, le moyen d'appelant passe un appel en utilisant tout autre moyen de communication (14; 15) que le moyen de détermination va déterminer comment pouvant être utilisé.

4. Dispositif de communication (1) selon la revendication 1, comprenant en outre:
un moyen de réception de saisie d'enregistrement conçu pour recevoir une saisie de l'information sur les correspondants, de l'information support et de l'information désignant la touche d'actionnement prédéterminée (21) de la part de l'utilisateur; et
un moyen d'enregistrement conçu pour stocker les informations sur les correspondants, les informations relatives au support et les informations désignant la touche d'actionnement prédéterminée (21) qui sont reçues par le moyen de réception de saisie d'enregistrement dans le moyen de stockage en association.

5. Procédé de communication pour un dispositif de communication (1), comprenant les étapes suivantes:
stocker, des informations sur les correspondants qui désignent un correspondant, des informations relatives au support désignant un moyen de communication (14; 15) parmi la pluralité de moyens de communication (14; 15) et permettant de passer un appel au correspondant, et des informations indiquant une touche d'actionnement prédéterminée (21) prévue sur le dispositif de communication (1); et
recevoir une saisie des informations sur les correspondants et provenant d'un utilisateur,
au cas où les informations sur les correspondants comprennent une saisie de l'adresse SIP, recevoir la saisie de l'adresse SIP,
au cas où l'adresse SIP reçue n'inclut pas une partie de données désignant un nom de domaine, générer l'adresse SIP en appliquant un nom de domaine prédéterminé; et
au cas où les informations relatives au support associées aux informations sur les correspondants reçues sont stockées, acquérir les informations relatives au support associées au correspondant, et passer un appel au correspondant indiqué par les informations sur les correspondants acquises en utilisant les moyens de communication (14; 15) indiqués par les informations relatives au support acquises,
au cas où les informations relatives au support associées aux informations sur les correspondants reçues sont stockées, acquérir les informations relatives au support associées au correspondant, et passer un appel au correspondant indiqué par les informations sur les correspondants acquises en utilisant les moyens de communication (14; 15) indiqués par les informations relatives au support acquises,
au cas où les informations relatives au support indiquent un réseau local sans fil (15) et que les informations sur les correspondants indiquent une adresse SIP, passer un appel au correspondant indiqué par l'adresse SIP en utilisant un réseau local sans fil (15).

6. Support d'enregistrement d'informations lisible par ordinateur qui stocke un programme pour commander un dispositif de communication (1) muni d'une pluralité de moyens de communication (14; 15) pour fonctionner comme:
moyen de stockage (12; 13) conçu pour stocker en association pour une pluralité de correspondant, des informations sur les correspondants qui désignent un correspondant, des informations relatives au support désignant un moyen de communication (14; 15) parmi la pluralité de moyens de communication (14; 15) et permettant de passer un appel au correspondant, et des informations indiquant une touche d'actionnement prédéterminée (21) prévue sur le dispositif de communication (1), et
dans lequel la pluralité de moyens de communication (14; 15) comprennent au moins un moyen de communication (14; 15) utilisant un téléphone cellulaire, et les informations sur les correspondants comprennent un numéro de téléphone,
dans lequel la pluralité de moyens de communication (14; 15) comprennent au moins un moyen de communication (14; 15) utilisant un réseau local sans fil, LAN (15),
et les informations sur les correspondants incluent une adresse SIP, de protocole d'initiation de session,
dans lequel l'adresse SIP comprend une partie données qui désigne un nom d'utilisateur et une partie données qui désigne un nom de domaine;
un moyen de réception de saisie de correspondant conçu pour recevoir une saisie des informations sur le correspondants, provenant d'un utilisateur, et
au cas où les informations sur les correspondants comprennent une saisie de l'adresse SIP, le moyen de réception de saisie de correspondant conçu pour recevoir la saisie de l'adresse SIP;
un moyen de génération conçu pour, au cas où l'adresse SIP reçue par le moyen de réception de saisie sur les correspondants n'inclut pas une partie de données désignant le nom de domaine, générer l'adresse SIP en appliquant un nom de domaine prédéterminé; et
un moyen d'appelant conçu pour, au cas où l'information de support associée à l'information sur les correspondants reçue par le moyen de réception de saisie de correspondant est stockée dans le moyen de stockage (12 ; 13), acquérir les informations relatives au support associées au correspondant reçues du moyen de stockage (12; 13), et passer un appel au correspondant indiqué en utilisant les informations sur les correspondants acquises en utilisant le moyen de communication (14; 15) parmi la pluralité de moyens de communication (14; 15) qui est indiquée par les informations relatives au support acquises,
au cas où l'utilisateur appuie sur la touche d'actionnement prédéterminée (21) , le moyen d'appelant conçu pour acquérir les informations sur les correspondants et l'information de support associée à l'information indiquant la touche d'actionnement (21) qui est extraite du moyen de stockage (12; 13), et conçu pour passer un appel au correspondant indiqué par l'information sur les correspondants acquises en utilisant le moyen de communication (14; 15) indiqué par les informations relatives au support acquises, et
au cas où les informations relatives au support indiquent un réseau local sans fil (15) et les informations sur les correspondants indiquent une adresse SIP, le moyen d'appelant conçu pour passer un appel au correspondant indiqué par l'adresse SIP en utilisant un réseau local sans fil (15).
